# EUROPEAN PATENT SPECIFICATION

(11) **EP 2 324 650 B1**
(45) Date of publication and mention of the grant of the patent: **19.09.2012**
(21) Application number: 09790491.6
(22) Date of filing: 15.07.2009
(51) Int. Cl.: H04W 4/10

(54) **RESTRICTING PARTICIPATION IN A PUSH-TO-TALK ( PTT) COMMUNICATION SESSION**
BESCHRÄNKUNG DER TEILNAHME AN EINER KOMMUNIKATIONSSITZUNG DES TYPS PUSH-TO-TALK (PTT)
RESTRICTION SÉLECTIVE D'UNE PARTICIPATION À UNE SESSION DE COMMUNICATION DE MESSAGERIE VOCALE INSTANTANÉE

(30) Priority: 15.07.2008 US 80869 P; 06.04.2009 US 167074 P; 13.07.2009 US 502007
(43) Date of publication of application: 25.05.2011
(73) Proprietor: Qualcomm Incorporated, San Diego, CA 92121 (US)
(72) Inventor: AGGARWAL, Ashutosh, San Diego CA 92121 (US); GILL, Harleen, San Diego CA 92121 (US); BREWER, Beth, Ann, San Diego CA 92121 (US); MAGGENTI, Mark, San Diego CA 92121 (US); SANTHANAM, Avind, V., San Diego CA 92121 (US)
(74) Representative: Gates, Marie Christina Esther
(86) International application number: PCT/US2009/050740
(87) International publication number: WO 2010/009261

(56) References cited:
- GB-A- 2 403 622
- US-A1- 2005 186 970
- US-A1- 2006 111 135
- US-A1- 2006 252 432
- US-A1- 2007 037 597
- US-A1- 2007 233 802

## Description

### BACKGROUND OF THE INVENTION

### 1. Field of the Invention

Embodiments of the present invention are directed to selectively restricting participation in a communication session at a communications device in a wireless communications system.

### 2. Description of the Related Art

There exists a wireless telecommunication service that provides a quick one-to-one or one-to-many communication between groups of wireless communication devices, such as mobile telephones, that is generically referred to as "Push-To-Talk" (PTT) capability. The specific PTT group of recipient devices for the communicating wireless device is commonly set up by the carrier. A PTT communication connection is typically initiated by a single button-push on the wireless device that activates a half-duplex link between the speaker and each member device of the group and once the button is released, the device can receive incoming PTT transmissions. In some arrangements, the PTT speaker will have the "floor" where no other group member can speak while the speaker is speaking. Once the speaker releases the PTT button, any other individual member of the group can engage their PTT button and they will have the floor.

In certain situations, it can be desirous to restrict access to the communication functionality of a wireless communication device. For example, if the owner of a set of mobile devices that comprise a communication group must pay for the airtime of PTT and other communications between the devices, the owner may wish to restrict certain usage of the communication service based on the location and/or time to limit costly usage.

US Patent Publication No. US 2007/037597 discloses architecture and implementation of closed user groups and limiting mobility in wireless networks.

US Patent Publication No. US 2005/186970 discloses a method of PoC instant temporary group chat based on presence and location.

US Patent Publication No. US 2006/11135 discloses a method to facilitate distribution of group identifications for push-to-talk groups.

GB Patent Publication No. GB 2 403 622 discloses dynamically adding users to a group in a telecommunications system.

US Patent Publication No. US 2006/252432 discloses a method and system for enabling venues to selectively block incoming calls to cellular phones present in venue premises.

### SUMMARY

Embodiments as set out in the appended claims are directed to determining whether to permit a server-arbitrated communication session at a wireless communications device within a wireless communications system. The wireless communications device receives a request to participate in the server-arbitrated communication session. The wireless communications device obtains information related to a current location of the wireless communications device. The wireless communications device determines whether the obtained information satisfies one or more conditions of restriction and/or permission for participation of the wireless communication device in server-arbitrated communication session. The wireless communications device selectively restricts itself from participating in the server-arbitrated communication session based on this determination.

### BRIEF DESCRIPTION OF THE DRAWINGS

FIG. 1 is a representative diagram of one embodiment of a wireless network with a designated PTT group of wireless telecommunication devices communicating with a communication server and other computer devices across the wireless network.

FIG. 2 is a diagram of one embodiment of a wireless network in a common cellular telecommunication configuration.

FIG. 3 is a block diagram illustrating the computer platform of the wireless telecommunication device embodied with PTT capability.

FIG. 4 is a block diagram of one embodiment of the various software layers resident on the computer platform of the wireless communication device.

FIG. 5 illustrates a process of selectively restricting communication sessions based on location in accordance with an embodiment of the invention.

FIG. 6 illustrates a process of selectively restricting communication sessions based on both location and time in accordance with an embodiment of the invention.

### DETAILED DESCRIPTION

Aspects of the invention are disclosed in the following description and related drawings directed to specific embodiments of the invention. Alternate embodiments may be devised without departing from the scope of the invention. Additionally, well-known elements of the invention will not be described in detail or will be omitted so as not to obscure the relevant details of the invention.

In this description, the terms "communication device," "wireless device," "wireless communications device," "PTT communication device," "handheld device," "mobile device," and "handset" are used interchangeably. The terms "call" and "communication" are also used interchangeably. The term "application" as used herein is intended to encompass executable and non-executable software files, raw data, aggregated data, patches, and other code segments. The term "PTT" encompasses a push-to-talk voice communication and "PTX" encompasses a push-to-share data communication, both of which typically occur through an initial fast setup half-duplex communication.

The words "exemplary" and/or "example" are used herein to mean "serving as an example, instance, or illustration." Any embodiment described herein as "exemplary" and/or "example" is not necessarily to be construed as preferred or advantageous over other embodiments. Likewise, the term "embodiments of the invention" does not require that all embodiments of the invention include the discussed feature, advantage or mode of operation.

Further, many embodiments are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the invention may be embodied in a number of different forms, all of which have been contemplated to be within the scope of the claimed subject matter. In addition, for each of the embodiments described herein, the corresponding form of any such embodiments may be described herein as, for example, "logic configured to" perform the described action.

The access network may be further connected to additional networks outside the access network, such as a corporate intranet or the Internet, and may transport data packets between each access terminal and such outside networks. An access terminal that has established an active traffic channel connection with one or more modem pool transceivers is called an active access terminal, and is said to be in a traffic state. An access terminal that is in the process of establishing an active traffic channel connection with one or more modem pool transceivers is said to be in a connection setup state. An access terminal may be any data device that communicates through a wireless channel or through a wired channel, for example using fiber optic or coaxial cables. An access terminal may further be any of a number of types of devices including but not limited to PC card, compact flash, external or internal modem, or wireless or wireline phone. The communication link through which the access terminal sends signals to the modem pool transceiver is called a reverse link or traffic channel. The communication link through which a modem pool transceiver sends signals to an access terminal is called a forward link or traffic channel. As used herein the term traffic channel can refer to either a forward or reverse traffic channel.

Furthermore, embodiments described below are directed to an implementation within a CDMA2000 network architecture. Reference can be had to the known standards and construction of CDMA2000 systems and network interfaces as would be known to one of skill in the art. Other telecommunication standards, such as CDMA2000 Evolution Data-Optimized (EvDO) or IMT-2000, can likewise be used in implementations of the embodiments disclosed herein.

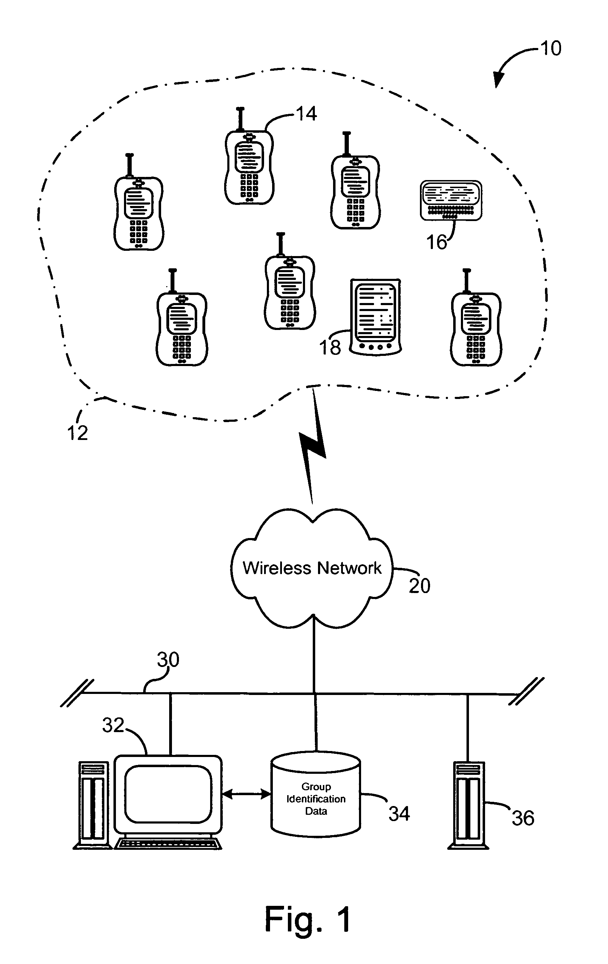

With reference to the figures in which like numerals represent like elements throughout, FIG. 1 illustrates one embodiment of a system 10 with a communication server 32 and one or more wireless telecommunication devices in a communication group 12, such as wireless telephone 14, smart pager 16, and personal digital assistant (PDA) 18, that communicate with other wireless telecommunication devices across a wireless network 20. In the system 10, each wireless telecommunication device 14, 16, 18 is capable of selectively and directly communicating across the wireless communication network 20 with a target set of one or more other wireless telecommunication devices. For example, the target set for mobile telephone 14 can be all devices in the communication group 12 or a subset thereof, such as pager 16 and/or PDA 18.

In this embodiment, the wireless telecommunication device (such as mobile telephone 14) notifies the communication computer device, shown here as communication server 32, which is present on a server-side LAN 30 across the wireless network 20, to indicate that the wireless device is present, i.e. accessible, on the wireless network 20. The communication computer device 32 can share this information with the set of target wireless telecommunication devices designated by the first wireless telecommunication device, or can also share the information with other computer devices resident on the server-side LAN 30 or accessible across the wireless network 20. The communication computer device 32 can have an attached or accessible database 34 to store the group identification data for the wireless devices.

In an example, a communication, such as a PTT communication, can be established through a half-duplex channel between the communicating wireless telecommunication device 14, 16, 18 and the one or more other wireless telecommunication devices of the target set of devices. While embodiments of the invention are described as generally being directed to half-duplex communication sessions, it will be readily apparent that other embodiments can be directed to any server-arbitrated communication session, including full-duplex communication sessions (e.g., VoIP, etc.). Also, the communication computer device 32 can attempt to bridge the requested direct communication with the target set if at least one of the wireless telecommunication devices of the target set have informed the communication computer device 32 of their presence on the wireless network 20. Other half and full duplex communications can be accordingly restricted as is more fully described herein.

The communication computer device 32 can also inform the wireless telecommunication device 14, 16, 18 of the inability to bridge a direct communication to the target set 12 if one or more of the wireless telecommunication devices of the target set have not informed the communication computer device 32 of their presence on the wireless network 20. Further, while the communication computer device 32 is shown here as having the attached database 34 of group identification data, the communication computer device 32 can have group identity data resident thereupon, and perform all storage functions described herein. Also shown here is a storage server 36 for storage of data that is accessible to the communication group 12 and the communication server 32.

The communication can be voice, applications, graphic media, such as pictures in JPEG, TIF, and the like, or audio files such as MP3, MP4, WAV, and the like. The media can also be video or streaming media, such as a multimedia application (PowerPoint, MOV file, and the like). Also, in an example, the communication session can correspond to a half-duplex audio conference among members of the communication group 12. As will be appreciated, in this type of group communication session, the speed of the connection and the quality of media delivery (e.g., voice data) are important to maintain Quality of Service (QoS) to the end-user(s).

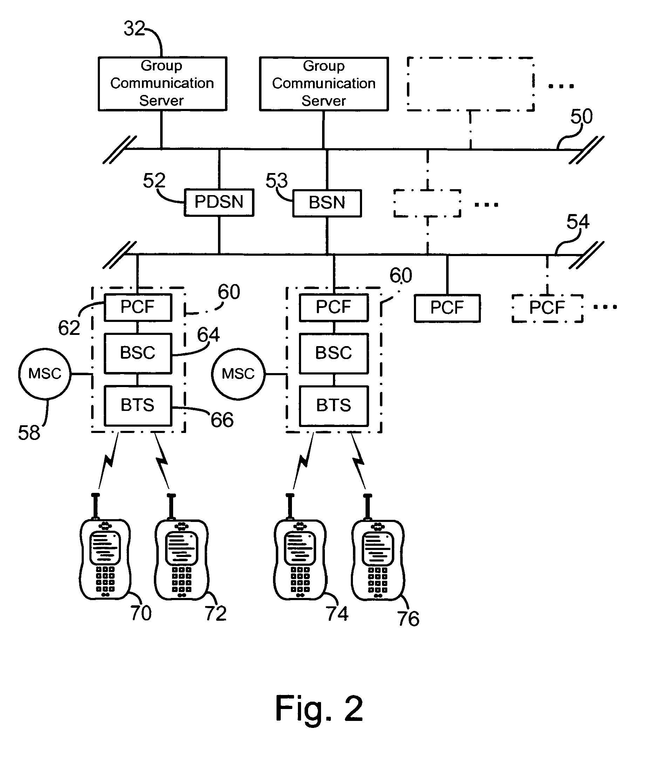

FIG. 2 is a representative diagram of one embodiment of a wireless network in a common cellular telecommunication configuration, having a series of communication computer devices, such as communication server 32 that controls communications between the wireless communication devices of set group members (devices 70, 72, 74, 76) in a PTT system. The wireless network is merely exemplary and can include any system whereby remote modules communicate over-the-air between and among each other and/or between and among components of a wireless network 20, including, without limitation, wireless network carriers and/or servers. A series of communication servers 32 are connected to a communication server LAN 50. Wireless telephones can request packet data sessions from the communication server(s) 32 using a data service option.

The communication server 32 is connected to a wireless service provider's packet data service node (PDSN) such as PDSN 52, and/or a broadcast serving node (BSN) 53 shown here resident as on a carrier network 54. The PDSN 52 and BSN 53 with the associated base stations 60 can constitute a regional communication system (e.g., an access network or radio access network), and may further include other server side 50 components, that will collectively control communications to the wireless communication devices 70,72,74,76 for a geographical or virtual region. Each PDSN 52 or BSN 53 can interface with a base station controller 64 of a base station 60 through a packet control function (PCF) 62. The PCF 62 is typically located in the base station 60. The carrier network 54 controls messages (generally in the form of data packets) sent to a mobile switching center ("MSC") 58. The carrier network 54 communicates with the MSC 58 by a network, the Internet and/or POTS ("plain ordinary telephone system"). Typically, the network or Internet connection between the carrier network 54 and the MSC 58 transfers data, and the POTS transfers voice information. The MSC 58 can be connected to one or more base stations 60. In a similar manner to the carrier network, the MSC 58 is typically connected to the base transceiver station (sometimes referred to as "branch-to-source ") (BTS) 66 by both the network and/or Internet for data transfer and POTS for voice information. The BTS 66 ultimately broadcasts and receives messages wirelessly to and from the wireless devices, such as cellular telephones 70,72,74,76, by short messaging service ("SMS"), or other over-the-air methods known in the art. It should also be noted that carrier boundaries and/or PTT operator network boundaries do not inhibit or prohibit the sharing of data as described herein.

Cellular telephones and mobile telecommunication devices, such as wireless telephone 14, are being manufactured with increased computing capabilities and are becoming tantamount to personal computers and hand-held PDAs. These "smart" cellular telephones allow software developers to create software applications that are downloadable and executable on the processor of the wireless device. The wireless device, such as cellular telephone 14, can download many types of applications, such as web pages, applets, MIDlets, games and data. In wireless devices that have designated a communication group 12 (Figure 1), the wireless communication device can directly connect with the other member of the set and engage in voice and data communication session. However, all such group-direct communications may be 'server-arbitrated', which means that the communication sessions occur through, or be at the control of, the communication server 32. Each data packet of the devices does not necessarily have to travel through the communication server 32 itself, but the communication server 32 may be able to ultimately control the communication session because the communication server 32 will typically be the only server-side 30 component that is aware of and/or can retrieve the identity of the members of the communication group, or direct the identity of the members of the communication group 12 to another computer device.

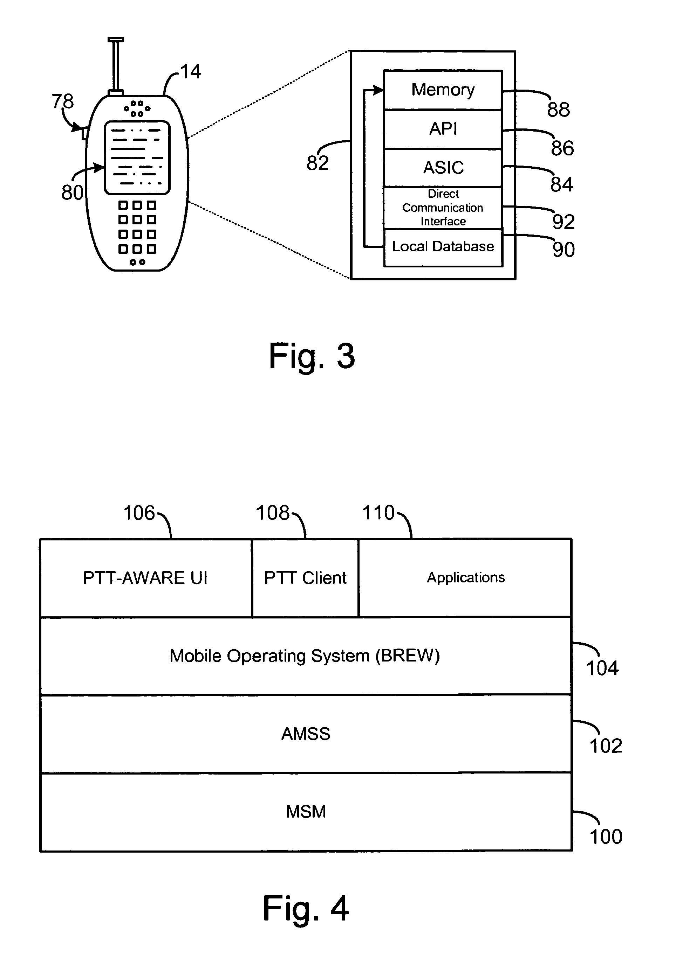

FIG. 3 is a block diagram illustrating a wireless telecommunications device 14 (e.g., a mobile telephone) according to an embodiment of the invention. Referring to FIG. 3, the wireless telecommunications device 14 includes a PTT button 78 that is configured to open a direct communication to a target set of devices (e.g., other members of the communication group 12). The wireless device 14 is also shown as having a graphics display 80 to the user of the wireless device 14. The wireless device 14 includes a computer platform 82 that can handle voice and data packets, and receive and execute software applications transmitted across the wireless network 20 to include the communications.

The computer platform 82 includes, among other components, an application-specific integrated circuit ("ASIC") 84, or other processor, microprocessor, logic circuit, programmable gate array, or other data processing device. The ASIC 84 is installed at the time of manufacture of the wireless device and may not normally be upgradeable. The ASIC 84 or other processor executes an application programming interface ("API") layer 86, which includes the resident application environment, and can include the operating system loaded on the ASIC 84. The resident application environment interfaces with any resident programs in the memory 88 of the wireless device. An example of a resident application environment is the "binary runtime environment for wireless" (BREW) software developed by QUALCOMM^{®} for wireless device platforms.

As shown here, while the wireless device 14 can be a mobile telephone with a graphics display 80, in alternative embodiments the wireless device can correspond to any type of wireless device with a computer platform 82 as known in the art, such as a personal digital assistant (PDA), a pager with a graphics display 26, or even a separate computer platform that has a wireless communication portal, and may otherwise have a wired connection to a network or the Internet. Further, the memory 88 can include read-only or random-access memory (RAM and ROM), EPROM, EEPROM, flash cards, or any memory common to computer platforms. The computer platform 82 can also include a local database 90 for storage of software applications not actively used in memory 88. The local database 90 is typically comprised of one or more flash memory cells, but can be any secondary or tertiary storage device as known in the art, such as magnetic media, EPROM, EEPROM, optical media, tape, or soft or hard disk.

In this embodiment of the wireless communication device of FIG. 3, the computer platform 82 also includes a direct communication interface 92 that can open the direct communication channel from the wireless device (e.g., for a half-duplex voice communication in a PTT call). The direct communication interface 92 may also be part of the standard communication interface for the wireless device which ordinarily carries the voice and data transmitted to and from the wireless device. The direct communication interface 92 typically includes hardware as is known in the art.

FIG. 4 is a diagram of one embodiment of the software layers resident on the computer platform 82 of the wireless communication device 74, with a PTT facility and a group-directed communication facility. In this embodiment, the computer platform 82 in the mobile device environment consists of a series of software "layers" developed on top of the Mobile Station Modem (MSM) 100 and the Advanced Mobile Subscriber Software (AMSS) 102, developed by QUALCOMM®, drives the underlying MSM chipset and implements the software protocol stack for the entire suite of CDMA communication technologies that include CDMA2000 1X and CDMA2000 1xEV-DO. There is a mobile operating system layer 104, which in this embodiment is BREW®, also developed by QUALCOMM. The mobile operating system layer 104 application programming interfaces for chip- or device-specific operations, while providing an isolation layer that eliminates direct contact to the AMSS 100 and any OEM software on the computer platform. The mobile operating system layer 104 enables application development that uses mobile device features without having to rewrite the application each time a new release of the device-specific software is released.

The PTT Client 108 is an application that offers access to PTT services through an external interface, here shown at a PTT-aware UI 106. The PTT Client includes all the functions required to enable mobile operating system 104 applications, such as the other resident applications 110. In addition to providing access to PTT services with the PTT Client 108, the PTT Client 108 can act as an isolation layer between all PTT-aware applications and the interface to the communication computer device 102. In this embodiment, the PTT Client 108 maintains access to PTT services, responds to communication requests, processes all PTT-aware mobile operating system applications requests for PTT services, processes all outgoing PTT requests, collects and packages vocoder packets for originating PTT talk spurts, and parses packets of vocoder data for terminated PTT talk spurts.

In one embodiment, a handler will provide direct access to the external communication interface, or here, an AMSS 102 interface. The media handler responds to PTT requests for group-directed services by invoking the appropriate APIs, such as those from other resident applications 110, and can service the requests from the user and informs the user the result of any group-directed media request. The handler can be invoked to have the AMSS 102 interface brought to an active state and ready to broadcast on the network, as is more fully described herein. Thus, the AMSS 102 or other communication interface typically has a dormant state and active state such that resources are only requested from the wireless communication network in the active state of the communication interface, e.g. the device components are powered-up and ready to transmit.

In a first embodiment, as shown in FIGS. 3 and 4, the wireless communication device 14 can be configured to selectively transmit and/or receive communications from one or more other members of a group 12 of wireless communication devices. The wireless communication device 14 can include computer platform 82 that controls the device functionality and has one or more applications 110 resident thereon, a location device resident on the computer platform 82, which can be a software application or configured in hardware. In an example, the location device can correspond to a global positioning system (GPS) device, or other device that triangulates geographical position of the device based at least in part upon signals from the base station(s) 60. In an example, the location device can be configured to selectively output geographic location data to any resident device or application on the device 14. The location can also be a virtual location or service-identifier, such as a sector of mobile infrastructure. Also resident on the computer platform 82 is a control application, which can be included among the applications 110, and can configured to selectively obtain location data from the location device and restrict communication capability based on the location information of the device 14. For example, as will be described below in more detail, the control application can selectively permit or restrict communication sessions at the wireless communication device 14 based on the location information of the device 14.

In other embodiments, the computer platform 82 can include a time determination device, such as a clock or other device that can determine local time based upon communication with a base station 60, and the control application can either solely or further restrict a communication capability based upon time data, possibly in addition to a location-based (e.g., geographical) restriction. The time data may be based upon a time reference, such as Greenwich Mean Time (GMT) (also known as UTC time) or GPS time or can be the local time for the wireless communication device 14. The communication session can correspond to a half-duplex communication session, a full-duplex communication session, a PTT session, a PTX session, a Voice-over-Intemet-Protocol (VoIP) session and/or any combination thereof. As will be described below in more detail, a location and/or time-based restriction can be applied to any of the above-noted session types, and can be implemented in a number of ways (e.g., blocking call requests from the device 14, blocking announce message for restricted calls from being displayed to a user thereof, etc.).

In one embodiment, restrictions of the device's 14 communication sessions can be based on multiple parameters or criteria, and these parameters can be inter-dependent. For example, a time-based restriction may only be 'active' or enforced when the device 14 is determined to be in a particular area or location. Conversely, a location-based restriction may only be 'active' or enforced within a particular period of time. Accordingly, if restriction parameters change during the communication (e.g. the time has gone past 5pm, or the wireless communication device 14 has moved out of defined location region), the control application can either (i) terminate an active communication session immediately, (ii) give a warning to the user that the communication session will terminate soon and then terminate the session after a given time period, or (iii) allow the communication until ended by a user of the device 14. Accordingly, the owner, controller or administrator (e.g., not necessarily the actual user of the device 14) of the control application can configure the device 14 with regard to how to handle the situation where an active communication session, that is initiated without restriction, later qualifies for restriction.

In other embodiments, access to the control application of the wireless communication device 14 may be restricted by the carrier such that only the carrier can modify the device settings for allowing communications. Alternately, the control application can have a security code, such as a pin or other code, which can be selectively accessed by the owner (not necessarily the user) of the device 14 to set the parameters of access to the communication capability. Thus, each individual wireless communication device can set its own location and/or time restrictions, or a group of wireless communications, such as communication group 12, can have all restrictions similarly set.

In a use-case example, assume that an owner of a construction site desires to purchase a group of mobile telephones that comprise a communication group 12. The construction site owner does not want the workers to abuse their communication privileges (i.e., PTT calls), because the airtime for calls is charged to the owner. Accordingly, the owner desires to restrict the phone usage to working hours (e.g. 9am to 5pm) and further wants to restrict the calls to within a given proximity of a geographic location of the construction site. The owner either requests that the carrier set the location and/or time restriction for communication sessions at each of the mobile phones, or the mobile phones can have a security code to allow the owner to set this parameter, and the workers are unable to alter it. Through this system, the communication server 32 need not be aware of the restriction, such that no overhead or resources need to be dedicated to enforce this restriction at the communication server 32. In other words, in this example, the session restriction, which is based on both location and time in this example, is handset-enforced.

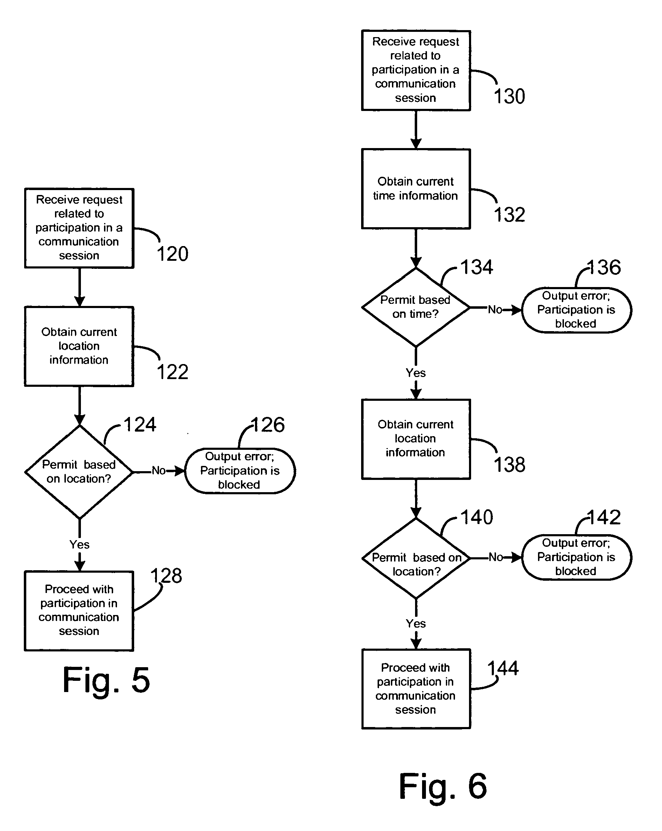

FIG. 5 illustrates a process of selectively restricting communication sessions based on location in accordance with an embodiment of the invention. Referring to FIG. 5, a request related to participation in a communication session is received at a wireless communication device, 120. In an example, the request related to participation in the communication session can correspond to a request by a user of the wireless communication device 14 to initiate a new communication session, or alternatively can correspond to receipt of a call announce message that announces a communication session originated by another wireless communication device. After receiving the communication session request in 120, the control application on the computer platform 82 queries the location device (e.g., a GPS receiver, or another type of position triangulation device) to obtain current location information associated with the wireless communication device 14, 122. Alternatively, the control application can monitor service-related information (e.g., in a SystemParameters message) to ascertain its current serving area (e.g., subnet, sector, etc.), such that a separate location device on the device 14 need not be explicitly queried (e.g., although the separate location device, such as a GPS receiver, could still be used to calculate a time estimate even if it is not being used to compute location). As discussed above, the location information can correspond to a current serving area (e.g., sector, subnet, etc.) of the device 14, or can correspond to a geographic coordinate (e.g., GPS, latitude/longitude, etc.) of the device 14.

Referring to FIG. 5, after obtaining the current location information associated with the device 14, the control application of the device 14 determines whether the current location information of the device 14 permits the device 14 to participate in the requested communication session from 120, 124. For example, in performing the determination of 124, the control application can compare the current location information obtained in 122 with a predefined location region that is associated either with a zone that permits communication sessions or a zone that restricts communication sessions for the device 14. The result of this comparison can then indicate whether the device 14 is permitted to initiate or join the communication session from 120. For example, in accord with the above use-case, the control application of the device 14 can compare the current location information from 122 with location information associated with the construction site (e.g., a serving sector in proximity of the construction site, a geographical range in proximity to the construction site, etc.).

As will be appreciated by one of ordinary skill in the art, the predefined location region can correspond to a region within which sessions are permitted for participation, or alternatively to a region within which sessions are restricted from participation. Accordingly, the predefined location region can correspond to a condition either for restriction or permission. Thus, the predefined location region can be either for inclusion (e.g., permitting sessions within the region) or exclusion (e.g., restricting sessions within the region).

If the control application determines that the comparison indicates that the wireless communication device 14 is not permitted to engage in the requested communication session in 124, then an error is outputted to a user of the device 14, participation by the device 14 in the communication session is blocked, and the process terminates, 126 (e.g. the communication is denied or rejected). Otherwise, if the control application determines that the comparison indicates that the wireless communication device 14 is permitted to engage in the requested communication session in 124, then the communication session is allowed, 128.

FIG. 6 illustrates a process of selectively restricting communication sessions based on both location and time in accordance with an embodiment of the invention. Referring to FIG. 6, a request related to participation in a communication session is received at a wireless communication device, 130. In an example, the request related to participation in the communication session can correspond to a request by a user of the wireless communication device 14 to initiate a new communication session, or alternatively can correspond to receipt of a call announce message that announces a communication session originated by another wireless communication device. After receiving the communication session request in 130, the control application on the computer platform 82, the control application obtains current time information, 132. In an example, the current time information obtained in 132 can correspond to time maintained by an internal clock within the device 14, or alternatively can be received from the network.

Referring to FIG. 6, after obtaining the current time information associated with the device 14, the control application of the device 14 determines whether the current time information of the device 14 permits the device 14 to participate in the requested communication session from 130, 134. For example, in performing the determination of 134, the control application can compare the current time information obtained in 132 with a predefined time period that is associated either with permitting communication sessions or restricting communication sessions for the device 14. The result of this comparison can then indicate whether the device 14 is restricted, based on time, from initiating or joining the communication session from 130.

As will be appreciated by one of ordinary skill in the art, the predefined time period can correspond to a period within which sessions are permitted for participation, or alternatively to a period within which sessions are restricted from participation. Accordingly, the predefined time period can correspond to a condition either for restriction or permission. Thus, the predefined time period can be either for inclusion (e.g., permitting sessions within the period) or exclusion (e.g., restricting sessions within the period).

For example, in accord with the above use-case, the control application of the device 14 can compare the current time information from 132 with a predefined time period associated with the construction site (e.g., 9am to 5pm). If the control application determines that the comparison indicates restriction of the communication session in 134, then an error is outputted to a user of the device 14, 136, and participation by the device 14 in the communication session is blocked. Alternatively, if the control application determines that the comparison indicates not to restrict the communication session in 134, then the process advances to 138. In an example, in FIG. 6, blocks 138, 140, 142 and 144 correspond to blocks 122, 124, 126 and 128 of FIG. 5, respectively, and as such will not be discussed further for the sake of brevity.

In an alternative embodiment, the current time information obtained in 132 can alter the operation of blocks 138 through 144, such that these blocks do not necessarily correspond to blocks 122 through 128 of FIG. 5, respectively. For example, different predefined time periods can be associated with different location regions that permit communication sessions at the device 14. For example, in the construction site example from above, assume that a construction worker using device 14 is scheduled at a first construction site from 9am to 12pm, and at a second construction site from 1pm to 5pm. In this case, in an example, based on the current time information, the device 14 can restrict communication sessions to the first construction site from 9am to 12pm, can permit unrestricted access to communication sessions between 12pm and 1pm (e.g., because the construction worker is assumed to be 'in transit') and can restrict communication sessions to the second construction site from 1pm to 5pm. This example illustrates how the predefined location region used for comparison with the device's 14 current location can be affected by other criteria or conditions for restriction and/or permission, such as time in this example.

In another example, assume that a student using device 14 attends school Monday through Friday during school-hours (e.g., 7 am to 3 pm). In this case, in an example, based on the current time information, the device 14 can restrict usage of the device 14 within proximity of the school to contact a limited contact list (e.g., emergency numbers only) during school hours, and can permit unrestricted of the device 14 when school is not in session.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods, sequences and/or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., access terminal). In the alternative, the processor and the storage medium may reside as discrete components in a user terminal.

In one or more exemplary embodiments, the functions described may be implemented in hardware, software, firmware, or any combination thereof If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

While the foregoing disclosure shows illustrative embodiments of the invention, it should be noted that various changes and modifications could be made herein without departing from the scope of the invention as defined by the appended claims. The functions, steps and/or actions of the method claims in accordance with the embodiments of the invention described herein need not be performed in any particular order. Furthermore, although elements of the invention may be described or claimed in the singular, the plural is contemplated unless limitation to the singular is explicitly stated.

## Claims

1. A method of determining whether to permit a server-arbitrated communication session at a wireless communications device within a wireless communications system, comprising:
receiving, at the wireless communications device, a request to participate in the server-arbitrated communication session; **characterised by** the steps of:
obtaining, at the wireless communications device, information related to a current location of the wireless communications device;
determining, at the wireless communications device, whether the obtained information satisfies one or more conditions of restriction and/or permission for participation of the wireless communication device in server-arbitrated communication sessions; and
selectively restricting the wireless communications device from participating in the server-arbitrated communication session based on the determining step.

2. The method of claim 1, wherein the server-arbitrated communication session is one or more of the following: a group communication session including three or more session participants, a one-to-one communication session, a half-duplex communication session, a full-duplex communication session, a push-to-talk PTT, session, a push-to-transfer ,PTX, session and/or a Voice-over-Internet-Protocol ,VoIP, session.

3. The method of claim 1, wherein the received request corresponds to a request, by a user of the wireless communications device, to initiate the server-arbitrated communication session.

4. The method of claim 1, wherein the received request corresponds to a call announce message, originated by another wireless communication device, that announces the server-arbitrated communication session.

5. The method of claim 1, wherein obtained information further includes current time information.

6. The method of claim 5, wherein the current time information is determined either based on an internal clock at the wireless communications device, or is based on time information provided from an access network configured to serve the wireless communications device.

7. The method of claim 1, wherein the current location of the wireless communications device corresponds to a geographic location or a service-area identifier.

8. The method of claim 7, wherein the geographic location corresponds to a latitude and longitude coordinate, or a global positioning system ,GPS, coordinate.

9. The method of claim 7, wherein the service-area identifier corresponds to a sector identifier and/or a subnet identifier.

10. The method of claim 1, wherein the selectively restricting step restricts the wireless communications device from participating in the server-arbitrated communication session if the determining step determines that the obtained information either satisfies the one or more conditions for restriction, or does not satisfy the one or more conditions for permission.

11. The method of claim 1, wherein the selectively restricting step permits the wireless communications device to participate in the server-arbitrated communication session if the determining step determines that the obtained information either satisfies the one or more conditions for permission, or does not satisfy the one or more conditions for restriction.

12. The method of claim 1, wherein the one or more conditions of restriction and/or permission are established by an entity other than a user of the wireless communication device when the receiving step receives the request.

13. The method of claim 12, wherein the entity is an owner, controller and/or administrative user of the wireless communication device.

14. The method of claim 1, wherein the wireless communications device is permitted to participate in the server-arbitrated communication session based on an initial execution of the obtaining and determining steps.

15. The method of claim 14, wherein, during the server-arbitrated communication session and based on a subsequent execution of the obtaining and determining steps, the wireless communications device is determined to no longer satisfy the one or more conditions of restriction and/or permission for participation of the wireless communication device in server-arbitrated communication sessions.

16. The method of claim 15, wherein the selectively restricting step restricts the wireless communications device from further participation the server-arbitrated communication session based on the subsequent execution of the obtaining and determining steps.

17. A wireless communications device (14) configured to participate in a server-arbitrated communication session within a wireless communications system, comprising:
means for receiving, at the wireless communications device (14), a request to participate in the server-arbitrated communication session; **characterised by**:
means for obtaining information related to a current location of the wireless communications device (14);
means for determining whether the obtained information satisfies one or more conditions of restriction and/or permission for participation of the wireless communication device in server-arbitrated communication sessions; and
means for selectively restricting the wireless communications device (14) from participating in the server-arbitrated communication session based on the determination of the means for determining.

18. A computer-readable storage medium comprising instructions, which, when executed by a wireless communications device configured to participate in a server-arbitrated communication session within a wireless communications system, cause the wireless communications device to perform operations, the instructions comprising:
program code to receive, at the wireless communications device, a request to participate in the server-arbitrated communication session; **characterised by**:
program code to obtain information related to a current location of the wireless communications device;
program code to determine whether the obtained information satisfies one or more conditions of restriction and/or permission for participation of the wireless communication device in server-arbitrated communication sessions; and
program code to selectively restrict the wireless communications device from participating in the server-arbitrated communication session based on the determination of the program code to determine.

## Patentansprüche

1. Ein Verfahren zum Bestimmen, ob eine serververmittelte Kommunikationssitzung mit einem drahtlosen Kommunikationsgerät innerhalb eines drahtlosen Kommunikationssystems zugelassen wird, welches aufweist:
Empfangen, in dem drahtlosen Kommunikationsgerät, einer Anfrage zum Teilnehmen an der serververmittelten Kommunikationssitzung, **gekennzeichnet durch** die folgenden Schritte:
Erhalten, in dem drahtlosen Kommunikationsgerät, von Information, welche auf einen derzeitigen Standort des drahtlosen Kommunikationsgerätes bezogen ist;
Bestimmen, in dem drahtlosen Kommunikationsgerät, ob die erhaltene Information einer oder mehreren Bedingungen zum Beschränken und/oder Zulassen der Teilnahme des drahtlosen Kommunikationsgerätes an serververmittelten Kommunikationssitzungen genügen, und
wahlweises Beschränken des drahtlosen Kommunikationsgerätes vom Teilnehmen an der serververmittelten Kommunikationssitzung, basierend auf dem Schritt des Bestimmens.

2. Verfahren nach Anspruch 1, wobei die serververmittelte Kommunikationssitzung eine oder mehrere der folgenden ist: eine Gruppenkommunikationssitzung, welche drei oder mehr Sitzungsteilnehmer hat, eine eins-zu-eins Kommunikationssitzung, eine Halbduplex-Kommunikationssitzung, eine Vollduplex- Kommunikationssitzung, eine Push-to-Talk, PTT, Sitzung, eine Push-to-Transfer, PTX, Sitzung und/oder eine Voice-over-Internet-Protocol, VoIP Sitzung.

3. Verfahren nach Anspruch 1, wobei die empfangene Anfrage eine Anfrage von einem Nutzer des drahtlosen Kommunikationsgerätes zur Einleitung der serververmittelten Kommunikationssitzung entspricht.

4. Verfahren nach Anspruch 1, wobei die empfangene Anfrage einer Anrufsankündigungsnachricht entspricht, die von einem anderen drahtlosen Kommunikationsgerät stammt, welches die serververmittelte Kommunikationssitzung ankündigt.

5. Verfahren nach Anspruch 1, wobei die erhaltene Information weiterhin aktuelle Zeitinformation beinhaltet.

6. Verfahren nach Anspruch 5, wobei die Bestimmung der aktuellen Zeitinformation entweder auf eine interne Uhr in dem drahtlosen Kommunikationsgerät basiert, oder auf eine Zeitinformation basiert, die von einem Zugriffsnetzwerk, welches zum Bedienen des drahtlose Kommunikationsgeräts konfiguriert ist, bereitgestellt wird.

7. Verfahren nach Anspruch 1, wobei der aktuelle Standort des drahtlosen Kommunikationsgeräts einem geografischen Standort oder einem Servicegebiets-Identifikator entspricht.

8. Verfahren nach Anspruch 7, wobei der geographische Standort einer Längen- und Breitenkoordinate oder einer Global Positioning System, GPS, Koordinate entspricht.

9. Verfahren nach Anspruch 7, wobei der Servicegebiets-Identifikator einem Sektor- Identifikator und/oder einem Unternetz- Identifikator entspricht.

10. Verfahren nach Anspruch 1, wobei der Schritt des wahlweisen Beschränkens das drahtlose Kommunikationsgerät vom Teilnehmen an der serververmittelten Kommunikationssitzung beschränkt, wenn im Schritt des Bestimmens bestimmt wird, dass die erhaltene Information entweder der einen oder den mehreren Bedingung(en) zur Beschränkung genügt, oder der einen oder den mehreren Bedingung(en) zur Zulassung nicht genügt.

11. Verfahren nach Anspruch 1, wobei der Schritt des wahlweisen Beschränkens dem drahtlosen Kommunikationsgerät das Teilnehmen an der serververmittelten Kommunikationssitzung erlaubt, wenn der Schritt des Bestimmens bestimmt, dass die erhaltene Information entweder der einen oder den mehreren Bedingung(en) zur Zulassung genügt, oder der einen oder den mehreren Bedingung(en) zur Beschränkung nicht genügt.

12. Verfahren nach Anspruch 1, wobei die eine oder die mehreren Bedingung(en) zur Beschränkung und/oder Zulassung von einer anderen Einheit als der eines Nutzers des drahtlosen Kommunikationsgerätes aufgestellt wird, wenn der Schritt des Empfanges die Anfrage empfängt.

13. Verfahren nach Anspruch 12, wobei die Einheit ein Besitzer, Kontrolleur und/oder administrativer Nutzer des drahtlosen Kommunikationsgerätes ist.

14. Verfahren nach Anspruch 1, wobei es dem drahtlose Kommunikationsgerät erlaubt ist, an der serververmittelten Kommunikationssitzung basierend auf einer anfänglichen Ausführung der Schritte des Erhaltens und des Bestimmens teilzunehmen.

15. Verfahren nach Anspruch 14, wobei während der serververmittelten Kommunikationssitzung und basierend auf einer anschließenden Ausführung der Schritte des Erhaltens und Bestimmens, bestimmt wird, dass das drahtlose Kommunikationsgerät der einen oder den mehrere Bedingung(en) zur Beschränkung und/oder Zulassung zum Teilnehmen des drahtlose Kommunikationsgeräts an der serververmittelten Kommunikationssitzung nicht mehr genügt.

16. Verfahren nach Anspruch 15, wobei der Schritt des wahlweisen Beschränkens das drahtlose Kommunikationsgerät vom weiteren Teilnehmen an der serververmittelten Kommunikationssitzung basierend auf der anschließende Ausführung der Schritte des Erhaltens und Bestimmens beschränkt.

17. Ein drahtloses Kommunikationsgerät (14), welches ausgelegt ist an einer serververmittelten Kommunikationssitzung innerhalb eines drahtlosen Kommunikationssystems teilzunehmen, das folgendes aufweist:
Mittel zum Empfangen, in dem drahtlosen Kommunikationsgerät (14), einer Anfrage zum Teilnehmen an der serververmittelten Kommunikationssitzung, **gekennzeichnet durch**:
Mittel zum Erhalten von Information, die auf einen derzeitigen Standort des drahtlosen Kommunikationsgerätes (14) bezogen ist,
Mittel zum Bestimmen, ob die erhaltene Information einer oder mehreren Bedingungen der Beschränkung und/oder Zulassung zum Teilnehmen des drahtlosen Kommunikationsgerätes an serververmittelten Kommunikationssitzungen genügen, und
Mittel zum wahlweisen Beschränken des drahtlosen Kommunikationsgerätes (14) vom Teilnehmen an der serververmittelten Kommunikationssitzung, basierend auf der Bestimmung der Bestimmungsmittel.

18. Ein computer-lesbares Speichermedium, welches Befehle aufweist, die, wenn sie durch ein drahtloses Kommunikationsgerät ausgeführt werden, das zur Teilnahme an einer serververmittelten Kommunikationssitzung innerhalb eines drahtlosen Kommunikationssystems auslegt ist, das drahtlose Kommunikationsgerät veranlasst, Operationen auszuführen, wobei die Befehle folgendes aufweisen:
Programmcode zum Empfangen, in dem drahtlosen Kommunikationsgerät, einer Anfrage zum Teilnehmen an der serververmittelten Kommunikationssitzung, **gekennzeichnet durch**:
Programmcode zum Erhalten von Information, die auf einen derzeitigen Standort des drahtlosen Kommunikationsgerätes bezogen ist,
Programmcode zum Bestimmen, ob die erhaltene Information einer oder den mehreren Bedingung(en) zur Beschränkung und/oder Zulassung zur Teilnahme des drahtlosen Kommunikationsgerätes an serververmittelten Kommunikationssitzungen genügt; und
Programmcode zum wahlweisen Beschränken des drahtlosen Kommunikationsgerätes vom Teilnehmen an der serververmittelten Kommunikationssitzung, basierend auf der Bestimmung des Programmcodes zum Bestimmen.

## Revendications

1. Procédé pour déterminer si on permet une session de communication arbitrée par serveur au niveau d'un dispositif de communication sans fil dans un système de communication sans fil, comprenant les étapes suivantes :
recevoir, au niveau du dispositif de communication sans fil, une requête pour participer à la session de communication arbitrée par serveur ; **caractérisé par** les étapes suivantes :
obtenir, au niveau du dispositif de communication sans fil, des informations associées à un emplacement courant du dispositif de communication sans fil ;
déterminer, au niveau du dispositif de communication sans fil, si les informations obtenues satisfont une ou plusieurs conditions de restriction et/ou de permission pour la participation du dispositif de communication sans fil à des sessions de communication arbitrées par serveur ; et
restreindre sélectivement la participation du dispositif de communication sans fil à la session de communication arbitrée par serveur sur la base de l'étape de détermination.

2. Procédé selon la revendication 1, dans lequel la session de communication arbitrée par serveur est l'une ou plusieurs des sessions suivantes : une session de communication de groupe comprenant trois, ou plus, participants à la session, une session de communication individuelle, une session de communication semi-duplex, une session de communication en duplex intégral, une session de type appuyer-pour-parler, PTT, une session de type appuyer-pour-transférer, PTX, et/ou une session de Voix sur le Protocole Internet, VoIP.

3. Procédé selon la revendication 1, dans lequel la requête reçue correspond à une requête, faite par un utilisateur du dispositif de communication sans fil, pour initier la session de communication arbitrée par serveur.

4. Procédé selon la revendication 1, dans lequel la requête reçue correspond à un message d'annonce d'appel lancé par un autre dispositif de communication sans fil, qui annonce la session de communication arbitrée par serveur.

5. Procédé selon la revendication 1, dans lequel les informations obtenues comprennent en outre des informations de temps courant.

6. Procédé selon la revendication 5, dans lequel les informations de temps courant sont déterminées soit sur la base d'une horloge interne au niveau du dispositif de communication sans fil, soit sur la base d'informations temporelles fournies à partir d'un réseau d'accès agencé pour desservir le dispositif de communication sans fil.

7. Procédé selon la revendication 1, dans lequel l'emplacement courant du dispositif de communication sans fil correspond à un emplacement géographique ou à un identificateur de zone de service.

8. Procédé selon la revendication 7, dans lequel l'emplacement géographique correspond à des coordonnées de latitude et de longitude, ou à des coordonnées d'un système de positionnement global, GPS.

9. Procédé selon la revendication 7, dans lequel l'identificateur de zone de service correspond à un identificateur de secteur et/ou un identificateur de sous-réseau.

10. Procédé selon la revendication 1, dans lequel l'étape de restriction sélective restreint la participation du dispositif de communication sans fil à la session de communication arbitrée par serveur si l'étape de détermination détermine que les informations obtenues satisfont lesdites une ou plusieurs conditions de restriction, ou ne satisfont pas lesdites une ou plusieurs conditions de permission.

11. Procédé selon la revendication 1, dans lequel l'étape de restriction sélective permet au dispositif de communication sans fil de participer à la session de communication arbitrée par serveur si l'étape de détermination détermine que les informations obtenues satisfont lesdites une ou plusieurs conditions de permission, ou ne satisfont pas lesdites une ou plusieurs conditions de restriction.

12. Procédé selon la revendication 1, dans lequel lesdites une ou plusieurs conditions de restriction et/ou de permission sont établies par une entité autre qu'un utilisateur du dispositif de communication sans fil lorsque l'étape de réception reçoit la requête.

13. Procédé selon la revendication 12, dans lequel l'entité est un propriétaire, un contrôleur et/ou un utilisateur administratif du dispositif de communication sans fil.

14. Procédé selon la revendication 1, dans lequel le dispositif de communication sans fil est autorisé à participer à la session de communication arbitrée par serveur sur la base d'une exécution initiale des étapes d'obtention et de détermination.

15. Procédé selon la revendication 14, dans lequel, pendant la session de communication arbitrée par serveur et sur la base d'une exécution ultérieure des étapes d'obtention et de détermination, on détermine que le dispositif de communication sans fil ne satisfait plus lesdites une ou plusieurs conditions de restriction et/ou de permission pour la participation du dispositif de communication sans fil à des sessions de communication arbitrées par serveur.

16. Procédé selon la revendication 15, dans lequel l'étape de restriction sélective restreint la poursuite de la participation du dispositif de communication sans fil à la session de communication arbitrée par serveur sur la base de l'exécution ultérieure des étapes d'obtention et de détermination.

17. Dispositif de communication sans fil (14) agencé pour participer à une session de communication arbitrée par serveur dans un système de communication sans fil, comprenant :
des moyens pour recevoir, au niveau du dispositif de communication sans fil (14), une requête pour participer à la session de communication arbitrée par serveur ; **caractérisé par** :
des moyens pour obtenir des informations associées à un emplacement courant du dispositif de communication sans fil (14) ;
des moyens pour déterminer si les informations obtenues satisfont une ou plusieurs conditions de restriction et/ou de permission pour la participation du dispositif de communication sans fil à des sessions de communication arbitrées par serveur ; et
des moyens pour restreindre sélectivement la participation du dispositif de communication sans fil à la session de communication arbitrée par serveur sur la base la détermination des moyens pour déterminer.

18. Support de stockage lisible par un ordinateur comprenant des instructions, qui, lorsqu'elles sont exécutées par un dispositif de communication sans fil agencé pour participer à une session de communication arbitrée par serveur dans un système de communication sans fil, amènent le dispositif de communication sans fil à réaliser des opérations, les instructions comprenant :
du code de programme pour recevoir, au niveau du dispositif de communication sans fil, une requête pour participer à la session de communication arbitrée par serveur ; **caractérisé par** :
du code de programme pour obtenir des informations associées à un emplacement courant du dispositif de communication sans fil ;
du code de programme pour déterminer si les informations obtenues satisfont une ou plusieurs conditions de restriction et/ou de permission pour la participation du dispositif de communication sans fil à des sessions de communication arbitrées par serveur ; et
du code de programme pour restreindre sélectivement la participation du dispositif de communication sans fil à la session de communication arbitrée par serveur sur la base de la détermination du code de programme pour déterminer.
